# FASCICULE DE BREVET EUROPEEN

(11) **EP 2 984 881 B1**
(45) Date de publication et mention de la délivrance du brevet: **25.07.2018**
(21) Numéro de dépôt: 14722121.2
(22) Date de dépôt: 07.04.2014
(51) Int. Cl.: H04W 56/00, H04W 16/16

(54) **PROCÉDÉ DE COMMUNICATION SELON UNE NORME DE TYPE DECT**
KOMMUNIKATIONSVERFAHREN MIT DECT-STANDARD
COMMUNICATION METHOD COMPLYING WITH A DECT TYPE STANDARD

(30) Priorité: 08.04.2013 FR 1353109
(43) Date de publication de la demande: 17.02.2016
(73) Titulaire: Safran Electronics & Defense, 92100 Boulogne-Billancourt (FR)
(72) Inventeur: CHIODINI, Alain, F-92100 Boulogne Billancourt (FR); ROVER, Arnaud, F-92100 Boulogne Billancourt (FR)
(74) Mandataire: Lavialle, Bruno François Stéphane
(86) Numéro de dépôt international: PCT/EP2014/056951
(87) Numéro de publication internationale: WO 2014/166879

(56) Documents cités:
- GB-A- 2 296 163
- US-B1- 6 388 996

## Description

La présente invention concerne le domaine des communications numériques sans fil et plus particulièrement le domaine des communications suivant une norme du type DECT.

### ARRIERE PLAN DE L'INVENTION

La norme DECT (de l'anglais « Digital Enhanced Cordless Telecommunication ») est une norme de communication sans fil basée sur le mode d'accès AMRT (pour « Accès Multiple à Répartition dans le Temps ») et utilisée notamment pour établir une communication entre un combiné téléphonique mobile ou poste secondaire (appelé « poste mobile » ou « MP ») et un poste principal ou base (appelée également « Poste fixe » ou « FP »). Elle permet de créer des réseaux en étoile de plusieurs postes mobiles MP agrégés autour d'un poste fixe FP. Bien évidemment, ces dénominations sont purement académiques car le poste fixe peut être une unité autonome embarquée et donc susceptible de mouvement.

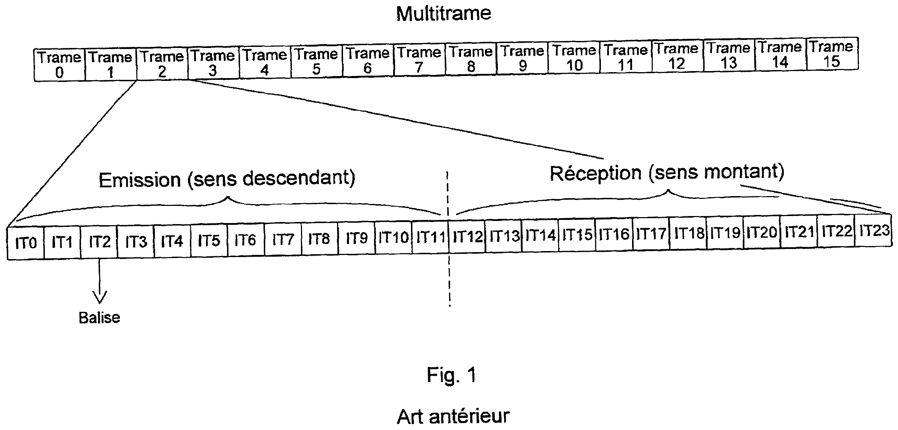

En référence à la figure 1, la norme DECT fonctionne en mode duplex par séparation temporelle (ou « Time Division Duplexing », abrégé en TDD) et comprend des intervalles de temps (ou « time slots ») dédiés à l'émission d'informations depuis le poste fixe vers le poste mobile (sens de communication qui est défini comme descendant) auxquels succèdent des intervalles de temps dédiés à la réception d'informations par le poste fixe depuis le poste mobile (sens de communication qui est défini comme montant). Ces intervalles de temps comprennent chacun 480 bits et sont regroupés en ensembles de vingt quatre intervalles numérotés de 0 à 23 constituant des trames successives de dix millisecondes. Seize de ces trames numérotées de 0 à 15 constituent une multi trame de 160 millisecondes. Conventionnellement, on considère que les intervalles de temps numérotés de 0 à 11 sont utilisés dans le sens descendant et les intervalles de temps numérotés de 12 à 23 sont utilisés dans le sens montant.

L'un des atouts du DECT est sa capacité à s'adapter à son environnement radio électrique. En effet, le poste fixe sélectionne de lui-même, parmi dix fréquences porteuses situées dans les gammes de fréquence de 1880 Mhz à 1900 MHz, celle qui propose la meilleure qualité de communication. Afin de permettre l'agrégation de postes mobiles autour du poste fixe, celui-ci émet régulièrement un signal appelé « balise ». Cette balise est émise par le poste fixe sur un des intervalles de temps du sens descendant et comprend notamment des informations relatives à la synchronisation des intervalles de temps ainsi qu'à la fréquence porteuse utilisée pour la communication.

Un réseau DECT mobile, c'est-à-dire dont le poste fixe et les postes mobiles peuvent se déplacer, peut être utilisé pour établir des réseaux de communication lorsque le recours à un réseau GSM n'est pas possible pour des raisons de confidentialité ou de défaut de couverture.

Lorsque plusieurs réseaux DECT mobiles cohabitent, il est parfois souhaitable d'établir un lien de communication entre les postes d'un premier réseau et ceux d'un second réseau voisin tout en maintenant la communication entre les postes d'un même réseau. A cette fin, les postes fixes et mobiles des deux réseaux comprennent généralement des moyens supplémentaires d'émission/réception selon la norme DECT. Les postes fixes des deux réseaux DECT en présence émettent chacun un signal de balise qui leur est propre. Ces postes fixes étant autonomes, il n'y a aucune coordination quant à la fréquence porteuse et/ou l'intervalle de temps sur lesquels chaque poste émet sa balise. Ainsi, si les signaux de balise sont émis au cours du même intervalle de temps, un des signaux occulte l'autre et le poste mobile ne reçoit, au mieux, qu'un seul des deux signaux. On parle alors d'occultation. Si les signaux sont émis sur le même intervalle de temps et sur la même fréquence porteuse, on parle alors de collision. Dans ces conditions, certains postes mobiles ne reçoivent qu'un seul voire aucun des signaux de balise et ils ne sont alors pas en mesure de communiquer avec les autres postes jusqu'à ce qu'il reçoive à nouveau un signal de balise leur permettant de s'agréger aux réseaux.

Pour des utilisations critiques comme par exemple des opérations de secours, des interventions militaires ou des essais industriels, la perte de communication peut être très préjudiciable et est considérée comme non acceptable.

Pour pallier à ces inconvénients, il a été envisagé de doubler le système de communication selon la norme DECT par un autre système de communication tel qu'une radio HF. Cette solution a pour inconvénient d'alourdir les équipements nuisant ainsi à leur portabilité et de rendre plus complexe l'établissement de liaison duplex.

Le document US6388996 divulgue un procédé de communication numérique sans fil selon l'art antérieur.

### OBJET DE L'INVENTION

Un but de l'invention est de proposer un procédé de communication numérique sans fil réduisant les risques d'occultation et/ou de collision des signaux de balise.

### RESUME DE L'INVENTION

A cet effet, on prévoit, selon l'invention, un procédé de communication numérique sans fil suivant une norme basée sur le mode d'accès AMRT au sein d'un réseau en étoile comprenant un poste principal et au moins un poste secondaire, la communication se faisant en mode duplex par séparation temporelle selon une pluralité de trames comprenant chacune des intervalles de temps d'un sens descendant dédiés à l'émission d'un signal depuis le poste principal vers le poste secondaire et d'intervalles de temps d'un sens montant dédiés à la réception par le poste principal d'un signal émis depuis le poste secondaire, l'émission et la réception se faisant sur une fréquence porteuse choisie parmi un nombre défini de fréquences porteuses, le procédé comprenant les étapes suivantes :
- émission par le poste principal dans un premier intervalle de temps du sens descendant d'un signal de balise ;
- réémission par le poste principal, dans un deuxième intervalle de temps du sens descendant de la même trame, du signal de balise;
émission par le poste secondaire d'au moins un signal de balise reçu, dans un intervalle de temps du sens descendant.

Ainsi, la répétition du signal de balise permet de réduire l'occurrence du cas où le signal de balise d'un premier réseau ne serait pas capté car occulté par l'émission du signal de balise d'un deuxième réseau.

Le poste secondaire sert ainsi de relais réémettant le signal de balise émis la première fois par le poste principal et/ou le signal de balise réémis par le poste principal. Ceci réduit encore l'occurrence de l'événement selon lequel le signal de balise du premier réseau n'est pas capté en raison de son occultation.

Selon un mode de réalisation particulier, la répétition du signal de balise est émise sur une fréquence porteuse différente du créneau de fréquence sur lequel le signal de balise a été émis. Ceci permet de limiter les cas de collision des signaux de balise.

La réémission du signal de balise par le poste secondaire peut également se faire dans une trame différente de la trame au cours de laquelle le signal de balise a été reçu pour le cas où la trame serait trop courte pour permettre au dispositif DECT de répéter le signal de balise.

L'invention comprend également un système de communication agencé pour mettre en oeuvre le procédé selon l'invention ainsi qu'un poste secondaire de communication numérique sans fil.

### BREVE DESCRIPTION DES DESSINS

Il sera fait référence aux figures annexées parmi lesquelles :
- la figure 1 est une représentation schématique d'un procédé de communication selon la norme DECT ;
- la figure 2 est une représentation schématique d'un dispositif de communication selon l'invention;
- la figure 3 est une représentation schématique de l'architecture de communication selon l'invention ;
- la figure 4 est une représentation schématique d'un échange entre les deux postes du dispositif de la figure 2.

### DESCRIPTION DETAILLEE DE L'INVENTION

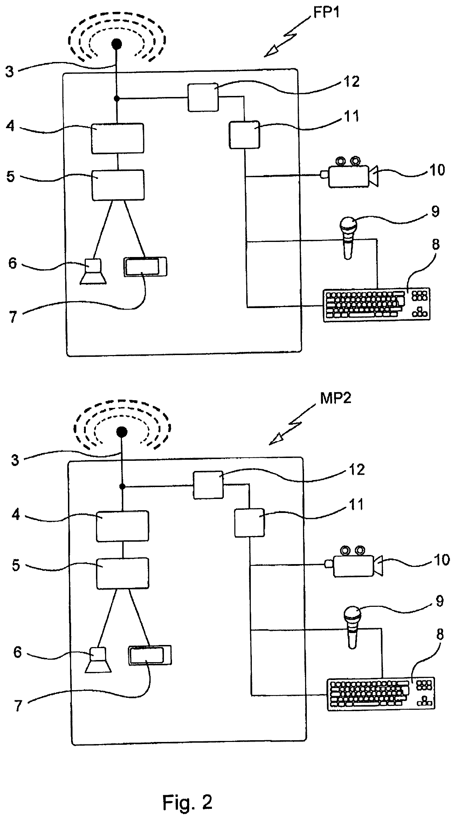

En référence à la figure 2, le procédé de communication numérique selon l'invention établit une liaison duplex sans fil entre un poste principal 1 appelé « poste fixe » ou FP et un ou plusieurs postes secondaires 2 appelés « poste mobile » ou MP comprenant chacun des moyens de réception d'un signal numérique comme par exemple une antenne 3 reliée à un démodulateur 4 connecté à un microcontrôleur 5. Le microcontrôleur 5 transforme le signal reçu par l'antenne 3 et décodé par le démodulateur 4 en un signal perceptible par l'utilisateur tel que de la voix, de l'image ou des informations et les transmet à l'utilisateur au moyen d'un haut-parleur 6 ou d'un écran LCD 7. Les postes FP 1 et MP 2 comprennent également chacun des moyens d'émission d'un signal numérique comprenant des moyens d'acquisition d'informations tel qu'un clavier 8, un microphone 9, ou un capteur d'image 10 reliés à un microcontrôleur 11 qui envoie ces informations à un modulateur 12 encodant les signaux d'entrée en signaux aptes à être envoyés par l'antenne 3. Le procédé de communication selon l'invention intervient sur trente deux fréquences porteuses généralement, désignées 20 à 52, réparties entre les fréquences 2025 et 2100 MHz. La méthode d'adaptation du procédé de communication selon l'invention aux conditions d'interférence et de disponibilité de l'espace radioélectrique est identique à celle de la norme DECT et est connue de l'homme du métier. Ainsi, l'émission et/ou la réception des signaux selon le procédé de l'invention peut s'établir sur l'une quelconque des trente deux fréquences porteuses 20 à 52, cette fréquence porteuse pouvant évoluer au cours de la communication.

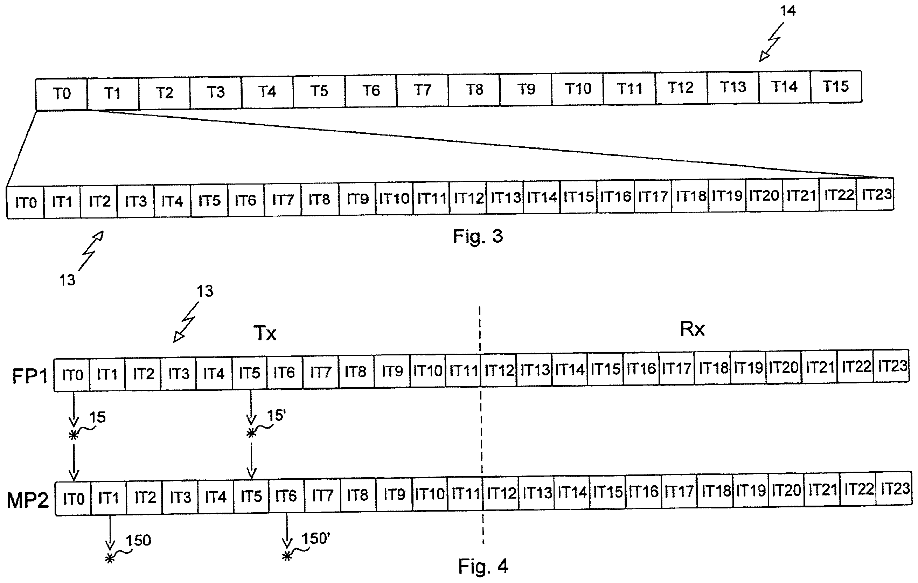

En référence à la figure 3, le procédé de communication selon l'invention établit une communication entre le poste FP 1 et chaque poste mobile MP 2 en mode duplex par séparation temporelle. Le procédé échange des informations en envoyant des mots de quatre cent quatrevingt bits sur un intervalle de temps d'une durée de 0.4167 millisecondes. Vingt quatre intervalles de temps - identifiés IT0 à IT23- constituent une trame 13 de dix millisecondes. Seize trames -identifiées T0 à T15- forment une multi trame 14 de cent soixante millisecondes.

La figure 4 illustre un échange d'une trame 13 entre le poste fixe FP 1 et un poste mobile MP 2. Les douze premiers intervalles de temps IT0 à IT11 sont dédiés à l'émission d'informations depuis le poste fixe FP 1 vers le poste mobile MP 2. Au cours de cette période, appelée sens descendant et identifiée Tx, le poste fixe FP 1 se place en émission et le poste mobile en réception. Les douze intervalles de temps suivants IT12 à IT23 sont dédiés à l'émission d'informations depuis le poste mobile MP 2 vers le poste fixe FP 1. Au cours de cette période, appelée sens montant et identifiée Rx, le poste fixe FP 1 se place en réception et le poste mobile MP 2 en émission. Ainsi, les intervalles de temps de réception du poste mobile MP 2 sont synchronisés avec les intervalles de temps d'émission du poste fixe FP 1 et les intervalles de temps de réception du poste fixe FP 1 sont synchronisés avec les intervalles de temps d'émission du poste mobile MP 2.

Au cours du sens descendant Tx, le poste fixe FP 1 émet un signal de balise 15 (dont la teneur est connue de l'homme du métier) sur l'intervalle de temps IT0. Le signal de balise est ensuite réémis sur l'intervalle de temps IT5 de la même trame (dans la suite de la description, pour faciliter l'explication de l'invention, on désigne par « répétition 15' » le signal de balise réémis, ce dernier étant cependant identique dans sa structure au signal de balise 15). Cette répétition 15', en doublant l'émission du signal de balise 15, permet de réduire l'occurrence d'un événement d'occultation ou de collision des signaux de balise émis par deux postes fixes distincts.

Pendant le sens descendant Tx, le poste mobile MP 2 reçoit, au cours de l'intervalle de temps IT0 le signal de balise 15 et effectue une réémission 150 de celui-ci au cours de l'intervalle de temps suivant IT1 de la même trame, intervalle de temps normalement dédié à la réception. Le poste mobile MP 2 procède de la même manière lors de la réception sur l'intervalle de temps IT5 de la répétition 15' du signal de balise 15, et effectue une réémission 150' de celui-ci sur l'intervalle de temps suivant IT6 de la même trame, intervalle de temps normalement dédié à la réception.

Il peut survenir une situation particulière de réception dégradée dans laquelle, le poste fixe FP 1 émettant une répétition 15' du signal de balise 15 sur l'intervalle de temps descendant IT5, cette répétition 15' n'est pas reçue par le poste mobile MP 2. Cette absence de réception peut avoir notamment pour origine une collision de signaux. Quoi qu'il en soit, le poste mobile MP 2 effectue une deuxième réémission 151 du signal de balise 15 sur l'intervalle de temps IT6 de la trame normalement dédiée à la réception, et ce indépendamment de la réception de la répétition 15' du signal de balise 15. Ainsi, le signal de balise 15 est émis une seconde fois par le poste mobile MP2, augmentant alors la probabilité qu'un autre poste mobile du même réseau reçoive au moins un signal de balise. De la même manière, le poste mobile MP 2 peut n'avoir reçu que la répétition 15' qu'il réémet au moins une fois.

Afin de réduire autant que possible l'occurrence d'un événement d'occultation ou de collision des signaux de balise émis par deux postes fixes distincts, la répétition 15' du signal de balise 15 est émise sur une fréquence porteuse distincte de celle sur laquelle le signal de balise 15 a été émis. Par exemple, si le signal de balise 15 a été émis sur la fréquence 20, la répétition 15' de celui-ci sera émise sur l'une quelconque des fréquences 21 à 52. Ceci a pour effet de limiter les risques de collision entre les signaux de balises du poste fixe FP1 avec un autre poste fixe voisin.

Bien entendu, l'invention n'est pas limitée pas au mode de réalisation décrit mais englobe toute variante entrant dans le champ de l'invention telle que définie par les des revendications.

En particulier :
- bien qu'ici le démodulateur 4 et le modulateur 12 ainsi que les microcontrôleurs 5 et 11 soient distincts, l'invention s'applique également à des moyens de réception et d'émission d'un signal numérique qui peuvent être confondus et consister en une unique unité modulateur/ démodulateur et un seul microcontrôleur ;
- bien qu'ici l'émission des signaux intervienne sur une fréquence porteuse choisie parmi trente deux fréquences porteuses comprises entre 2025 et 2100 MHz, l'invention s'applique également à un procédé de communication dont les fréquences porteuses peuvent être plus ou moins nombreuses et se situer sur des gammes de fréquence différentes ;
- bien qu'ici une multi trame comprenne seize trames composées chacune de vingt quatre intervalles de temps d'une durée unitaire de 0,4167 millisecondes pendant lesquels sont transmis des mots de quatre cent quatre-vingt bits, l'invention s'applique également à des multi trames composées de plus ou moins de trames, chaque trame pouvant contenir une nombre quelconque d'intervalles de temps montants ou descendants portant des mots de taille quelconque ;
- bien qu'ici l'émission du signal de balise se fasse sur le premier intervalle de temps et sa répétition sur le cinquième intervalle de temps d'une même trame, l'émission du signal de balise comme sa répétition peuvent se faire sur n'importe lequel des intervalles de temps du sens descendant de la trame;
- bien qu'ici la réémission du signal de balise et de sa répétition par le poste mobile s'effectue sur un intervalle de temps du sens descendant qui suit immédiatement celui de sa réception, l'invention s'applique également à une réémission du signal de balise et/ou de sa répétition par le poste mobile, sur l'un quelconque des intervalles de temps du sens descendant de la même trame ou dans une trame différente ;
- bien qu'ici le procédé de communication sans fil soit basé sur une norme de type DECT, l'invention s'applique également à d'autres normes de communication sans fil basées sur le mode d'accès AMRT : « Accès Multiple à Répartition dans le Temps » telles que par exemple les normes UMTS, GSM, LTE ou PHS ;
- bien qu'ici le signal de balise soit réémis deux fois par le poste mobile au cours de la même trame, l'invention s'applique également à un nombre différent de réémission, comme par exemple trois réémissions ou plus du signal de balise au cours des intervalles de temps descendants d'une même trame, et ce indépendamment de la réception par ledit poste mobile d'une répétition du signal de balise émise par le poste principal.

On comprendra aisément que le procédé décrit ci-dessus est un procédé qui s'appuie sur une architecture standard selon la norme DECT mais qu'il y est apporté des modifications qui font de ce procédé une « norme propriétaire ». La modification d'une norme existante permet de reprendre des pans importants de cette norme, dont la fiabilité et la robustesse sont éprouvées, et permet de réduire les temps et coûts de développement en s'appuyant sur du matériel existant. D'autres normes de communication équivalentes pourraient être utilisées pour servir de base à l'invention.

On a noté que les appellations « poste fixe » et « poste mobile » sont conformes à celles utilisées dans la norme DECT pour distinguer un poste principal d'un poste secondaire du même réseau mais n'empêche pas que le poste principal soit mobile et le poste secondaire soit fixe, la latitude de positionnement relatif des postes principal et secondaires dépendant de leur portée radioélectrique.

## Revendications

1. Procédé de communication numérique sans fil suivant une norme basée sur le mode d'accès AMRT au sein d'un réseau en étoile comprenant un poste principal (MP 1) et au moins un poste secondaire (FP 2), la communication se faisant en mode Duplex par séparation temporelle selon une pluralité de trames comprenant chacune des intervalles de temps d'un sens descendant (Tx) dédiés à l'émission d'un signal depuis le poste principal (MP 1) vers le poste secondaire (FP 2) suivis d'intervalles de temps d'un sens montant (Rx) dédiés à la réception par le poste principal (MP 1) d'un signal émis depuis le poste secondaire (FP 2), l'émission et la réception se faisant sur une fréquence porteuse choisie parmi un nombre défini de fréquences porteuses, le procédé comprenant les étapes suivantes :
- émission par le poste principal dans un premier intervalle de temps (IT0) du sens descendant (Tx) d'un signal de balise (15);
- réémission par le poste principal, dans un deuxième intervalle de temps (IT5) du sens descendant (Tx) de la même trame, du signal de balise (15) ;
et **caractérisé en ce qu'**il comprend en outre une étape d'émission (150, 151) par le poste secondaire (MP 2) d'au moins un signal de balise (15) reçu, dans un intervalle de temps (IT1, IT6) du sens descendant (Tx).

2. Procédé selon la revendication 1, dans lequel le poste secondaire réémet le signal de balise (15) dans un deuxième intervalle de temps (IT6) du sens descendant (Tx) .

3. Procédé selon la revendication 1, dans lequel le signal de balise est réémis sur une fréquence porteuse différente de la fréquence porteuse sur laquelle le signal de balise (15) a été émis précédemment.

4. Procédé selon la revendication 1, dans lequel la réémission (150, 150') du signal de balise (15) par le poste secondaire (MP 2) se fait dans une trame différente de la trame au cours de laquelle le signal de balise (15) a été reçu.

5. Système de communication comprenant un poste principal (FP 1) et au moins un poste secondaire (MP 2) comprenant chacun des premiers moyens de réception (4) d'un signal de type AMRT et des deuxièmes moyens d'émission (5) d'un signal de type AMRT, les postes (FP 1, MP 2) du système étant agencés pour mettre en oeuvre le procédé selon l'une quelconque des revendications précédentes.

6. Poste secondaire de communication numérique sans fil (FP 2) suivant une norme du type AMRT selon une pluralité de trames comprenant chacune des intervalles de temps d'un sens descendant dédiés à l'émission d'un signal suivi d'intervalles de temps d'un sens montant dédiés à la réception d'un signal, l'émission et la réception se faisant sur une fréquence porteuse choisie parmi un nombre défini de fréquences porteuses, le poste étant **caractérisé en ce qu'**il est adapté à effectuer pour chaque signal de balise reçu, une réémission de ce signal, dans un intervalle de temps normalement dédié à la réception par le poste de communication secondaire.

## Patentansprüche

1. Verfahren zur schnurlosen digitalen Kommunikation gemäß einem Standard, der auf dem Zugriffsmodus TDMA innerhalb eines Sternnetzes basiert, das eine Hauptstation (MP 1) und mindestens eine Nebenstation (FP 2) umfasst, wobei die Kommunikation im Zeitduplexmodus gemäß einer Vielzahl von Rahmen erfolgt, die jeweils Zeitschlitze in Abwärtsrichtung (Tx) umfassen, die zum Senden eines Signals von der Hauptstation (MP 1) in Richtung der Nebenstation (FP 2) bestimmt sind, gefolgt von Zeitschlitzen in Aufwärtsrichtung (Rx), die zum Empfangen eines von der Nebenstation (FP 2) gesandten Signals durch die Hauptstation (MP 1) bestimmt sind, wobei das Senden und das Empfangen auf einer Trägerfrequenz erfolgen, die unter einer definierten Anzahl von Trägerfrequenzen ausgewählt wird, wobei das Verfahren die folgenden Schritte umfasst:
- Senden eines Leitsignals (15) von der Hauptstation in einem ersten Zeitschlitz (IT0) in Abwärtsrichtung (Tx),
- erneutes Senden des Leitsignals (15) von der Hauptstation in einem zweiten Zeitschlitz (IT5) in Abwärtsrichtung (Tx) des gleichen Rahmens;
und **dadurch gekennzeichnet ist, dass** es ferner einen Sendeschritt (150, 151) mindestens eines empfangenen Leitsignals (15) in einem Zeitschlitz (IT1, IT6) in Abwärtsrichtung (Tx) von der Nebenstation (MP 2) umfasst.

2. Verfahren nach Anspruch 1, bei dem die Nebenstation das Leitsignal (15) in einem zweiten Zeitschlitz (IT6) in Abwärtsrichtung (Tx) erneut sendet.

3. Verfahren nach Anspruch 1, bei dem das Leitsignal erneut auf einer Trägerfrequenz gesendet wird, die sich von der Trägerfrequenz, auf der das Leitsignal (15) zuvor gesendet wurde, unterscheidet.

4. Verfahren nach Anspruch 1, bei dem das erneute Senden (150, 150') des Leitsignals (15) von der Nebenstation (MP 2) in einem Rahmen erfolgt, der sich von dem Rahmen unterscheidet, während dem das Leitsignal (15) empfangen wurde.

5. Kommunikationssystem, umfassend eine Hauptstation (FP 1) und mindestens eine Nebenstation (MP 2), die jeweils erste Empfangsmittel (4) zum Empfangen eines Signals der Art TDMA und zweite Sendemittel (5) zum Senden eines Signals der Art TDMA umfassen, wobei die Stationen (FP 1, MP 2) der Kommunikationssystem so ausgebildet sind, dass sie das Verfahren nach einem der vorhergehenden Ansprüche durchführen.

6. Nebenstation (FP 2) zur schnurlosen digitalen Kommunikation nach einem Standard der Art TDMA gemäß einer Vielzahl von Rahmen, die jeweils Zeitschlitze in Abwärtsrichtung umfassen, die zum Senden eines Signals bestimmt sind, gefolgt von Zeitschlitzen in Aufwärtsrichtung, die zum Empfangen eines Signals bestimmt sind, wobei das Senden und das Empfangen auf einer Trägerfrequenz erfolgen, die unter einer definierten Anzahl von Trägerfrequenzen ausgewählt wird, wobei die Station **dadurch gekennzeichnet ist, dass** sie dazu geeignet ist, für jedes empfangene Leitsignal ein erneutes Senden dieses Signals in einem Zeitschlitz, der normalerweise zum Empfangen bestimmt ist, von der Nebenkommunikationsstation durchzuführen.

## Claims

1. A wireless digital communication method using a standard based on the TDMA access mode within a star network comprising a main station (MP 1) and at least one secondary station (FP 2), communication taking place in duplex mode by time division using a plurality of frames, each comprising down link (Tx) time slots dedicated to the main station (MP 1) transmitting a signal to the secondary station (FP 2) followed by up link (Rx) time slots dedicated to the main station (MP 1) receiving a signal transmitted from the secondary station (FP 2), transmission and reception taking place on a carrier frequency selected from a defined number of carrier frequencies, and the method comprising the following steps:
• the main station transmitting a beacon signal (15) in a first down link (Tx) time slot (IT0);
• the main station retransmitting the beacon signal (15) in a second down link (Tx) time slot (IT5) of the same frame;
and **characterized in that** it also includes a step of transmitting (150,151) by the secondary station (MP 2)at least one received beacon signal (15) in a down link (Tx) time slot (IT1, IT6).

2. A method according to claim 1, wherein the secondary station retransmits the beacon signal (15) in a second down link (Tx) time slot (IT6).

3. A method according to claim 1, wherein the beacon signal is retransmitted on a carrier frequency that is different from the carrier frequency on which the beacon signal (15) was previously transmitted.

4. A method according to claim 1, wherein the secondary station (MP 2) retransmits (150, 150') the beacon signal (15) in a frame different from the frame during which the beacon signal (15) was received.

5. A communication system comprising a main station (FP 1) and at least one secondary station (MP 2), each having first means (4) for receiving a TDMA type signal and second means (5) for transmitting a TDMA type signal, the stations (FP 1, MP 2) of the system being arranged to perform the method according to any preceding claim.

6. A wireless digital secondary communication station (FP 2) in compliance with a standard of the TDMA type using a plurality of frames, each comprising down link time slots dedicated to transmitting a signal followed by up link time slots dedicated to receiving a signal, transmission and reception being performed on a carrier frequency selected from a defined number of carrier frequencies, the station being **characterized in that** it is adapted to perform retransmitting of each received beacon signal in a time slot normally dedicated to reception by the secondary communication station.
